## Europäisches Patentamt
## European Patent Office
## Office européen des brevets

(19)

(11) Veröffentlichungsnummer: **0 126 972**
**A1**

(12)

# EUROPÄISCHE PATENTANMELDUNG

(21) Anmeldenummer: **84104611.3**

(22) Anmeldetag: **25.04.84**

(51) Int. Cl.³: **C 08 L 71/04**
C 08 J 3/20, C 08 J 3/00

(30) Priorität: **30.04.83 DE 3315803**

(43) Veröffentlichungstag der Anmeldung:
**05.12.84 Patentblatt 84/49**

(84) Benannte Vertragsstaaten:
**AT BE DE FR GB NL**

(71) Anmelder: **BASF Aktiengesellschaft**
**Carl-Bosch-Strasse 38**
**D-6700 Ludwigshafen(DE)**

(72) Erfinder: **Reffert, Rudi Wilhelm**
**Berliner Strasse 18**
**D-6711 Beindersheim(DE)**

(72) Erfinder: **Hambrecht, Jürgen, Dr.**
**Werderstrasse 30**
**D-6900 Heidelberg(DE)**

(72) Erfinder: **Echte, Adolf, Dr.**
**Leuschnerstrasse 42**
**D-6700 Ludwigshafen(DE)**

(72) Erfinder: **Heil, Eduard**
**Hardenburgstrasse 4**
**D-6703 Limburgerhof(DE)**

(72) Erfinder: **Swoboda, Johann, Dr.**
**Niewiesenstrasse 28**
**D-6700 Ludwigshafen(DE)**

(72) Erfinder: **Brandstetter, Franz, Dr.**
**Ritterbueschel 45**
**D-6730 Neustadt(DE)**

(72) Erfinder: **Siebel, Peter, Dr.**
**Trifelsring 20**
**D-6703 Limburgerhof(DE)**

(54) **Verfahren zur Herstellung von Polyphenylenether enthaltenden Formmassen.**

(57) Die Erfindung betrifft ein Verfahren zur kontinuierlichen Herstellung von hochmolekularen Polyphenylenether enthaltenden Mischungen, wobei 5 bis 50 gew.%ige Polyphenylenetherlösungen in einem mindestens eine Stufe umfassenden ersten Verdampfungsprozeß auf 60 bis 95 Gew.% Polymerisatgehalt aufkonzentriert werden und dann mit Schmelzen von anderen Polymeren und gegebenenfalls Zusatzstoffen unter scherenden Bedingungen vermischt und anschließend oder gleichzeitig während der Vermischung in einem mindestens eine Stufe umfassenden zweiten Verdampfungsprozeß von Lösungsmittel bis auf einen Restgehalt von weniger als 0, 1 Gew.% befriet werden. Die aufkonzentrierte Polyphenylenetherlösung ist zweckmäßig 120 bis 200°C heiß, das Mischen erfolgt bevorzugt in einem Verdampfungsextruder und beim zweiten Verdampfungsprozeß herrscht zweckmäßige ein Druck von 0, 5 bis 50 mbar und eine Temperatur von 220 bis 280°C.

EP 0 126 972 A1

Verfahren zur Herstellung von Polyphenylenether enthaltenden Formmassen

Die Erfindung betrifft ein Verfahren zur kontinuierlichen Herstellung von Mischungen aus Polyphenylenethern mit anderen bei Schmelztemperatur beständigen Polymeren, wobei Lösungen von Polyphenylenethern in organischen Lösungsmitteln mit den Polymeren unter Verdampfen des Lösungsmittels vermischt werden.

Bei diesen Mischungen handelt es sich um ungeformte oder vorgeformte Stoffe, welche aufgrund ihres Gehalts an Polyphenylenether sehr gut anwendbar sind bei hohen Spitzen- und Gebrauchstemperaturen.

Es ist bereits bekannt, hochmolekulare Polyphenylenether nach deren Herstellung aus einwertigen Phenolen aus der Reaktionslösung in aromatischen Lösungsmitteln mit Methanol zu fällen und das ausgefällte Polymere abzufiltrieren (vgl. US-PS 3 661 848). Das getrocknete Polymere wird üblicherweise anschließend in einem Extruder mit anderen Polymeren abgemischt. Nachteilig bei diesem bekannten Verfahren ist der Einsatz großer Mengen Lösungs- und Fällungsmittel. Außerdem kann durch die hohe Mischungstemperatur von 250 bis 350°C im Extruder, eine mechanische und thermische Produktschädigung eintreten. Ein weiterer Nachteil des bekannten Mischverfahrens ist der hohe Energieaufwand bei der Mischung und Lösungsmittelrückgewinnung.

In der DE-OS 31 31 440 ist ein Verfahren beschrieben, das die Nachteile des bisher bekannten Mischungsverfahrens zur Herstellung von Mischungen aus Polyphenylenether und anderen Polymeren vermeidet, indem Lösungen von Polyphenylenether mit den Polymeren versetzt und die erhaltenen Lösungen in einem Mehrstufenprozeß eingedampft werden. Bei diesem Verfahren werden die Polymeren dem Polyphenylenether in Gegenwart von viel Lösungsmittel beigemischt, so daß man große Mengen lösungsmittelhaltige Mischungen vom Lösungsmittel befreien muß, wobei die Apparatedimensionen vergrößert und die Anlagekosten der Verdampfungsanlagen verteuert werden, insbesondere dann, wenn Polymermischungen mit gleichen oder überwiegenden Mengen Styrolpolymerenanteilen, wie sie vorzugsweise angewendet werden, hergestellt werden sollen.

Aus den US-Patentschriften 4 283 503 und 4 322 506 ist ein Verfahren bekannt, bei dem Polyphenylenether mit einem Dienpolymeren in Lösung gemischt, die Mischung vom Lösungsmittel durch Polymerfällung oder Wasserdampfdestillation abgetrennt und anschließend mechanisch mit einem zweiten Dienpolymeren gemischt wird. Nach diesem bekannten Verfahren werden Polyphenylenethermischungen mit Elastomeren erhalten, die auch Polystyrol Fre/HB enthalten können. Das Polystyrol wird bei dem bekannten Verfahren im Extruder zugemischt, so daß durch die hohe Mischungstemperatur Produktschädigungen auftreten können.

Der vorliegenden Erfindung lag daher die Aufgabe zugrunde, die oben genannten Nachteile zu vermeiden und ein einfaches und billiges Verfahren
zur Herstellung von Mischungen aus Polyphenylenethern und anderen Polymeren aufzufinden, bei dem der Produktabbau der Polymerisatkomponenten wesentlich vermindert ist und wobei der Anfall großer Mengen Polymermischung mit relativ hohen Lösungsmittelgehalten vermieden wird.

Die Aufgabe wurde erfindungsgemäß dadurch gelöst, daß 5 bis 50 gewichtsprozentige Polyphenylenetherlösungen in einem ersten Verdampfungsprozeß
auf 60 bis 95 Gew.% Polyphenylenethergehalt aufkonzentriert, dann mit
einer Schmelze des anderen Polymeren in einer Mischzone, in der eine
Schergeschwindigkeit von 5 bis 400 sec$^{-1}$ herrscht, zugeführt und die
Mischungen in einem zweiten Verdampfungsprozeß vom restlichen Lösungsmittel bis auf einen Lösungsmittelgehalt von weniger als 0,1 Gew.% befreit
werden.

Nach bevorzugten Verfahrensweisen wird die aufkonzentrierte Polyphenylenetherlösung im 120 bis 200°C heißen Zustand der Mischzone zugeführt. Es
kann auch die aufkonzentrierte Polyphenylenetherlösung und die Polymerschmelze der Mischzone eines Verdampfungsextruders zugeführt werden. Bevorzugt beträgt die mittlere Verweilzeit der Mischungskomponenten in der
Mischzone 1 bis 200 Sekunden. Es ist auch ein Vorteil, wenn die Polymerschmelze 0,1 bis 20 Gew.% Zusatzmaterialien enthält. Besonders bevorzugt
ist ein Verfahren, bei dem die Schergeschwindigkeit 10 bis 200 sec$^{-1}$ beträgt. Bevorzugt ist auch ein Verfahren, bei dem im zweiten Verdampfungsprozeß ein Druck von 0,5 bis 50 mbar und eine Temperatur zwischen 220 und
280°C herrscht.

Die Polyphenylenether sind Eigenkondensationsprodukte von einwertigen
monocyclischen Phenolen, die durch Umsetzung der Phenole mit Sauerstoff
in Gegenwart von Katalysatorkomplexen hergestellt werden. Sie weisen Molekulargewichte von 20000 bis 90000, bevorzugt 25000 bis 80000, bestimmt
nach der in "Macromoleculares Syntheses" 1 (1978), Seite 83 angegebenen
Methode, auf. Sie können übliche Zusatzstoffe in üblichen Mengen eingemischt enthalten.

Die hochmolekularen Polyphenylenether, auch Poly(phenylenoxide) genannt,
sind aus der Literatur seit längerem bekannt (vgl. z.B. US-Patentschriften 3 561 848, 3 219 625, 3 306 874, 3 306 875 oder 3 378 505), so daß sich eine weitere Beschreibung erübrigt.

Als Lösungsmittel werden bei der Polykondensation Benzol, Toluol, Ethylbenzol, Cumol, Xylol, Methylethylbenzol und andere alkylierte aromatische Kohlenwasserstoffe mit bis zu 12 C-Atomen sowie aliphatische Kohlenwasserstoffe, vorzugsweise $C_6$- bis $C_{10}$-Kohlenwasserstoffe, halogenierte aromatische Kohlenwasserstoffe, wie Chlorbenzol, Dichlorbenzol u.a., Arylalkylether, wie Anisol, p-Methylanisol, Ethylphenylether u.a. sowie aromatische Carbonsäureester, wie Benzoesäuremethylester u.a. eingesetzt. Bevorzugt verwendet werden Toluol, Ethylbenzol, Anisol. Das Mischungsverfahren geht von Lösungen der Polyphenylenether in geeigneten Lösungsmitteln aus. Die Lösung stammt bevorzugt aus dem Herstellprozeß des Polyphenylenethers. Es ist auch möglich, festen Polyphenylenether in obigen Lösungsmitteln zu lösen.

Nach bekanntem Verfahren (vgl. DE-OS 31 31 440) kann das Verdampfen des Lösungsmittels bei Temperaturen zwischen 120 und 280°C und bei Drücken von 1 bis 3000 mbar vorgenommen werden. Es ist auch ein Vorteil, das Verdampfen in Gegenwart von Partialdruck senkenden Hilfsmitteln wie Wasser und/oder Methanol vorzunehmen.

Unter anderen bei Schmelztemperatur beständigen Polymeren werden alle organischen und anorganischen Polymeren verstanden, die mit Polyphenylenether mischbar sind und die in Form ihrer Schmelzen in den Polyphenylenether eingebracht werden können. Besonders geeignet sind die Homo- und Copolymere des Styrols und/oder seiner Homologen, die vorzugsweise mit Kautschuk modifiziert sein können. In den Copolymeren verwendet man im allgemeinen Acrylsäure oder Methacrylsäure oder ihre Derivate wie (Meth-)acrylsäureester, (Meth-)acrylamide oder (Meth-)acrylnitril, auch Maleinsäureanhydrid und die Ester der Maleinsäure, der Fumarsäure oder Itaconsäure sind einsetzbar. Unter Homologen des Styrols versteht man im engeren Sinn die im Kern oder der Seiten-Kette alkylierten Substitutionsprodukte, besonders p-Methylstyrol, m-Methylstyrol, o-Methylstyrol und ihre Mischungen, -Methylstyrol, mehrfach alkylierte Styrole wie 2,4-Dimethylstyrol und Styrole mit höheren Alkylsubstituenten, wie tert.-Butylstyrol oder Vinyltetralin, und solche mit Arylsubstituenten wie Phenylstyrol oder Vinylnaphthalin. Aber auch andere Substitutionsprodukte des Styrols sind im weiteren Sinn als Homologe des Styrols zu betrachten, wie die im Kern halogenierten, acylierten oder anderseitig substituierten Styrole. Diese Homologen können auch als Comonomere des Styrols verwendet werden. Zur Schlagfestmodifizierung der Polystyrole können in bekannter Weise z.B. Polybutadien, Styrol-Butadien-Kautschuk, Polyisopren, Polyacrylate, Ethylen-Vinylacetat-Copolymere, Polyisobutylen oder EPDM-Kautschuke eingesetzt werden.

Es ist üblich, daß das Mischungsverhältnis der anderen Polymeren zum Polyphenylenether 99 : 1 bis 1 : 99 Gewichtsteile, bezogen auf die Mischung, beträgt.

Bei dem erfindungsgemäßen ersten Verdampfungsprozeß, bei dem von einer 5 bis 50 gew.%igen Polyphenylenetherlösung, bezogen auf die Lösung, ausgegangen wird, wobei die Lösung bevorzugt aus dem Herstellprozeß des Polyphenylenethers stammt, ist von Vorteil, wenn der Prozeß einstufig ist und die Polyphenylenetherlösungen in einem Wärmeaustauscher unter Drücken von 10 bis 60 bar (absolut) auf Temperaturen von 220 bis 280°C erhitzt werden und auf Drücke von 0,5 bis 6,0 bar (absolut) und Temperaturen von 120 bis 200°C unter Verdampfen von Lösungsmitteln in einen Raum entspannt werden und daraus die Lösungsmitteldämpfe und die fließfähigen Polyphenylenether getrennt abgezogen werden. Der erste Verdampfungsprozeß kann auch einstufig in einem zonenweise beheizbaren dynamischen Dünnschichtverdampfer unter Drücken von 0,5 bis 6,0 bar (absolut) und Temperaturen von 120 bis 200°C durchgeführt werden und die fließfähigen Polyphenylenether und die Lösungsmitteldämpfe in einen Raum gelangen, aus dem sie getrennt abgezogen werden. Der erste Verdampfungsprozeß kann auch einstufig sein und in einem mit einem Temperaturgradienten beheizbaren Röhrenbündelverdampfer, der mit gebohrten Rohrstopfen auf der Eingangsseite oder mit teilweise oder über die ganze Länge gequetschten Rohren für die Gleichverteilung der Produktströme in den Rohren versehen ist und unter Drücken von 0,5 bis 6,0 bar (absolut) und Temperaturen von 120 bis 200°C durchgeführt werden und die fließfähigen Polyphenylenether und die Lösungsmitteldämpfe in einen Raum gelangen, aus dem sie getrennt abgezogen werden, oder in einem zonenweise beheizbaren Fallfilmverdampfer unter Drücken von 0,5 bis 6,0 bar (absolut) und Temperaturen von 120 bis 200°C durchgeführt werden und die fließfähigen Polyphenylenether und die Lösungsmitteldämpfe in einen Raum gelangen, aus dem sie getrennt abgezogen werden.

Der erste Verdampfungsprozeß kann auch zweistufig sein und die Polyphenylenetherlösungen in der ersten Stufe durch Entspannungsverdampfung oder durch Dünnschichtverdampfung oder durch Stopfenrohrverdampfung oder durch Fallfilmverdampfung auf 60 bis 80 Gew.% Feststoffgehalt aufkonzentriert werden und in der zweiten Stufe durch Verdampfung in Stopfen- oder Quetschrohren auf 80 bis 95 Gew.% Feststoffgehalt gebracht werden.

Nach erfindungsgemäßem Verfahren wird die auf 60 bis 95 Gew.% aufkonzentrierte Polyphenylenetherlösung, die vorzugsweise 120 bis 200°C heiß ist, gleichzeitig mit einer Schmelze des anderen Polymeren, vorzugsweise einer Styrolpolymerisat enthaltenden Schmelze, einer Mischzone, in der eine Schergeschwindigkeit von 5 bis 400 sec$^{-1}$, vorzugsweise von 10 bis 200 sec$^{-1}$, herrscht, zugefügt. In dieser Mischzone wird die Polyphenylenetherlösung mit dem geschmolzenen Polymeren in statischen oder dynamischen Mischern vermischt. Nach bevorzugter Verfahrensweise wird die aufkonzentrierte Polyphenylenetherlösung und die Polymerschmelze der Mischzone eines Verdampfungsextruders zugeführt. In derartigen Verdampfungsextrudern können Kunststoffe unter gleichzeitiger Entfernung flüchtiger Bestandteile mit Zusatzstoffen gemischt werden. Ein besonders geeignetes Mischverfahren in einem Verdampfungsextruder ist beispielsweise in der Publikation "Schneckenmaschinen in der Verfahrenstechnik" von H.Herrmann, 1972, Seiten 149 bis 160, Verlag Springer Berlin, Heidelberg, New York beschrieben. Es können aber auch Verdampfungskneter mit mindestens einer Verdampfungszone zur Anwendung kommen. Bei diesem Mischvorgang kann während der Vermischung, vorzugsweise bei Drücken von 0,5 bis 50 mbar und Temperaturen von 200 bis 280°C, die Mischung von Lösungsmitteln bis auf einen Restgehalt von unter 0,1 Gew.% befreit werden. Nach besonders bevorzugtem Verfahren beträgt die mittlere Verweilzeit der Mischungskomponenten in der Mischzone 1 bis 200, besonders bevorzugt 5 bis 100 Sekunden. Unter mittlerer Verweilzeit wird die Zeit verstanden, welche die Mischung im Mittel in der Mischzone verweilt. Sie ist definiert als das Verhältnis der in der Mischzone befindlichen Produktmenge zu der je Zeiteinheit in der Mischzone durchgesetzten Produktmenge. Es ist auch vorteilhaft, wenn die Polymerisatschmelze, welche mit der aufkonzentrierten Polyphenylenetherlösung vermischt wird, 0,1 bis 20, bevorzugt 2 bis 15 Gew.%, Zusatzmaterialien enthält. Unter Zusatzmaterialien werden hierbei übliche Füllstoffe, Farbstoffe, Flammschutzmittel, Stabilisatoren, Formtrennmittel, Antistatika, Schmier- und Gleitmittel ect. verstanden, die auf diese Weise schonend in die Gesamtmischung eingebracht werden können.

Die erhaltenen Mischungen werden anschließend an den Mischvorgang oder gleichzeitig während der Vermischung in einem zweiten Verdampfungsprozeß, bei dem bevorzugt ein Druck von 0,5 bis 50 mbar und eine Temperatur zwischen 220 und 280°C herrscht, von restlichen Lösungsmitteln bis auf einen Lösungsmittelgehalt von unter 0,1 Gew.%, bezogen auf die Mischung, befreit. Hierzu kann die Mischung nach Verlassen der Mischzone in einer Stufe in einem Röhrenbündelverdampfer mit gebohrten Rohrstopfen oder teilweise oder über die ganze Länge gequetschten Rohren für die Gleichverteilung der Produktströme in den Rohren bevorzugt bei Drücken von 0,5 bis 50 mbar und Temperaturen von 200 bis 280°C von Lösungsmitteln bis auf Restgehalte von weniger als 0,1 % befreit werden.

Es kann aber auch die in einem Verdampfungsextruder oder Verdampfungskneter mit mindestens einer Verdampfungszone mit Schmelzen anderer Polymeren, und gegebenenfalls Zuschlagstoffen, erhaltene Mischung gleichzeitig bei Drücken von 0,5 bis 50 mbar und Temperaturen von 200 bis 280°C von Lösungsmitteln bis auf Restgehalte von weniger als 0,1 % befreit werden. Vorteilhaft wird ein Verdampferextruder mit mehr als einer Verdampfungszone verwendet und die letzte Zone bei 0,5 bis 5 mbar betrieben. Vorteilhaft können kleine Mengen Verdampfungshilfsmittel wie Wasser oder Methanol flüssig oder dampfförmig zur Partialdruckabsenkung zugesetzt werden. Aus der letzten Stufe dieses zweiten Verdampfungsprozesses wird die Polymerenmischung als Schmelze in Strangform kontinuierlich ausgetragen, abgekühlt und granuliert.

Die flüchtigen Anteile aller Stufen werden getrennt kondensiert und gemeinsam aufgefangen; die gesammelten Kondensate werden über eine gemeinsame Leitung einer Destilliereinrichtung zugeführt, in der schwerflüchtige Verunreinigungen und gegebenenfalls die Verdampfungshilfen abgetrennt werden.

Das erfindungsgemäße Verfahren erlaubt es unter schonenden Bedingungen Polymermischungen aus Polyphenylenethern und anderen Polymeren, wie insbesondere Styrolpolymeren herzustellen. Die bei den bisherigen Verfahren auftretende z.T. starke Produktschädigung bei der Herstellung dieser Polymermischungen wird wesentlich vermindert bzw. völlig unterdrückt. Die resultierenden Polymermischungen besitzen dementsprechend eine erhöhte Wärmeformbeständigkeit, geringere Eigenfarbe und ein höheres Zähigkeitsniveau. Das gilt insbesondere für Polymermischungen auf Basis schlagzäh modifizierte Styrolpolymerisate und Polyphenylenethern.

Das erfindungsgemäße Verfahren vermeidet auch den Nachteil der anderen bekannten Verfahren, bei denen große Mengen Polymermischungen mit hohen Lösungsmittelgehalten anfallen und größere und teuere Apparate und Maschinen verwendet werden müssen.

Das erfindungsgemäße Verfahren wird an dem folgenden Beispiel erläutert. Zur Prüfung der Produkte wurden folgende Produktkenndaten ermittelt: Die Kerbschlagzähigkeit der Produkte wurde nach ISO 179 an bei 280°C gespritzten Normkleinstäben bei einer Prüftemperatur von 23°C gemessen. Die Wärmeformbeständigkeit wurde anhand des Vicat-Erweichungspunktes in °C nach ISO 306 Verfahren B, in Silikonöl bestimmt.

## Beispiel

Eine 10 gew.%ige Lösung von Poly-(2,6-dimethylphenylenether-1,4), im weiteren PPE genannt, mit der Grenzviskosität [ ] = 0,60 dl/g (Chloroform, 25°C) in Toluol, die noch aus dem Herstellungsprozeß 0,3 mg/kg Cu und 0,53 % Di-n-butylamin enthält, wird mit 4,4 Gew.% Trinonylphenylphosphit und 3,3 Gew.% Paraffinwachs, bezogen auf PPE, versetzt und bei 70°C kontinuierlich mit 8,15 kg/h unter einem Druck von 25 bar in einem beheizten Wärmeaustauschrohr auf 255°C erhitzt und in einem Sammelraum von 10 Liter auf einen Druck von 1,5 bar (absolut) und 152°C entspannt. Aus dem Sammelraum werden 7,0 kg/h Lösungsmitteldämpfe und 1,15 kg/h 70,9 gew.%ige PPE-Lösung getrennt entnommen. Der Toluoldampf wird auf Atmosphärendruck entspannt und kondensiert; das Kondensat enthält 0,50 Gew.% Di-n-butylamin. Die PPE-Lösung wird mit einer Zahnradpumpe kontinuierlich einem Verdampfungsextruder, der mit zwei bei 20 mbar betriebenen Verdampfungszonen und einer Granulateinzugs- und Aufschmelzzone ausgestattet ist so zugeführt, daß die Einspeisestelle im Extruder zwischen dem Granulateinzug und der ersten Verdampfungszone liegt. Der Extruder besitzt gleichsinnig drehende, dichtkämmende Schneckenwellen von 28 mm Durchmesser und wird mit 80 Upm betrieben und auf 270°C beheizt. Aus den beiden Verdampfungszonen werden 0,272 kg/h Lösungsmitteldämpfe abgezogen und kondensiert. Dem Extruder wird über den Granulateinzug 0,933 kg/h schlagzähes Polystyrol kontinuierlich zugeführt und am Schmelzenaustrag 1,874 kg/h Polymermischung in Form von Schmelzensträngen entnommen, die abgekühlt und granuliert werden. Das Produkt enthält 45 Gew.% PPE, besitzt einen Vicat-Erweichungspunkt von 136°C und eine Kerbschlagzähigkeit von $A_k = 12 \ [kJ/m^2]$. Es enthält 50 mg/kg Toluol und 1400 mg/kg Di-n-butylamin.

**Patentansprüche**

1. Verfahren zur kontinuierlichen Herstellung von Mischungen aus Polyphenylenethern mit anderen, bei Schmelztemperatur beständigen Polymeren, wobei Lösungen von Polyphenylenethern in organischen Lösungsmitteln mit den Polymeren unter Verdampfen des Lösungsmittels vermischt werden, dadurch gekennzeichnet, daß 5 bis 50 gew.%ige Polyphenyletherlösungen in einem ersten Verdampfungsprozeß auf 60 bis 95 Gew.% Polyphenylenethergehalt aufkonzentriert, dann mit einer Schmelze des anderen Polymeren einer Mischzone, in der eine Schergeschwindigkeit von 5 bis 400 sec$^{-1}$ herrscht, zugeführt und die Mischungen anschließend oder gleichzeitig während der Vermischung in einem zweiten Verdampfungsprozeß von restlichen Lösungsmitteln bis auf einen Lösungsmittelgehalt von unter 0,1 Gew.% befreit werden.

2. Verfahren nach Anspruch 1, dadurch gekennzeichnet, daß die aufkonzentrierte Polyphenyletherlösung im 120 bis 200°C heißen Zustand der Mischzone zugeführt wird.

3. Verfahren nach Anspruch 1, dadurch gekennzeichnet, daß die aufkonzentrierte Polyphenyletherlösung und die Polymerschmelze der Mischzone eines Verdampfungsextruders zugeführt werden.

4. Verfahren nach Anspruch 1, dadurch gekennzeichnet, daß die mittlere Verweilzeit der Mischungskomponenten in der Mischzone 1 bis 200 Sekunden beträgt.

5. Verfahren nach Anspruch 1, dadurch gekennzeichnet, daß die Polymerschmelze 0,1 bis 20 Gew.% Zusatzmaterialien enthält.

6. Verfahren nach Anspruch 1, dadurch gekennzeichnet, daß die Schergeschwindigkeit 10 bis 200 sec$^{-1}$ beträgt.

7. Verfahren nach Anspruch 1, dadurch gekennzeichnet, daß beim zweiten Verdampfungsprozeß ein Druck von 0,5 bis 50 mbar und eine Temperatur zwischen 220 und 280°C herrscht.

Europäisches
Patentamt

**EUROPÄISCHER RECHERCHENBERICHT**

**0126972**

Nummer der Anmeldung

EP 84 10 4611

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 071 093 (BASF AG) <br> * Seite 7, Zeile 21 - Seite 9, Zeile 27; Ansprüche 1, 4, 6 * & DE-A-3 131 440 (Kat. D, A) <br><br> --- | 1,2,7 | C 08 L 71/04 <br> C 08 J 3/20 <br> C 08 J 3/00 |
| P,A | US-A-4 388 444 (H.B. IRVIN) <br> * Spalte 7, Zeilen 50-66; Anspruch 1 * <br><br> --- | 1 | |
| A | US-A-4 153 639 (H.A. VAUGHN) <br> * Ansprüche 1, 4, 5 * <br><br> ----- | 1 | |

RECHERCHIERTE
SACHGEBIETE (Int. Cl. ³)

C 08 J 3/00
C 08 L 71/04

Der vorliegende Recherchenbericht wurde für alle Patentansprüche erstellt.

| Recherchenort | Abschlußdatum der Recherche | Prüfer |
|---|---|---|
| BERLIN | 12-07-1984 | IDEZ C.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82